# EUROPEAN PATENT SPECIFICATION

(11) **EP 3 306 194 B1**
(45) Date of publication and mention of the grant of the patent: **24.04.2019**
(21) Application number: 16192708.2
(22) Date of filing: 06.10.2016
(51) Int. Cl.: F23R 3/00, F23R 3/04, F23R 3/14

(54) **COMBUSTOR WALL ELEMENT AND METHOD FOR MANUFACTURING THE SAME**
BRENNKAMMERWANDELEMENT UND VERFAHREN ZUR HERSTELLUNG DAVON
ÉLÉMENT DE PAROI DE CHAMBRE DE COMBUSTION ET SON PROCÉDÉ DE FABRICATION

(43) Date of publication of application: 11.04.2018
(73) Proprietor: Ansaldo Energia IP UK Limited, London W1G 9DQ (GB)
(72) Inventor: VRANJIC, Nikola, 10000 ZAGREB (HR); MARKOVIC, Alen, 47000 KARLOVAC (HR); MIHELIC, Goran, 47000 KARLOVAC (HR); FURDEK, Stevica, 47250 DUGA RESA (HR); CANKOVIC, Damir, 47000 KARLOVAC (HR); MAURER, Michael, 79713 BAD SÄCKINGEN (DE)
(74) Representative: Bernotti, Andrea

(56) References cited:
- EP-A2- 2 148 141
- WO-A1-2014/078694
- US-A1- 2016 040 880

## Description

### TECHNICAL FIELD

The present invention relates to a combustor wall element as set forth in the claims. It further relates to a method for manufacturing a combustor wall element of the disclosed type.

### BACKGROUND OF THE INVENTION

EP 321 809 and, subsequently, WO93/17279, have disclosed premix burners with aerodynamic flame stabilization yielding excellent combustion performance and pollutant emissions. The common underlying concept is to provide a swirl generator which confines a swirl generator inner volume. The swirl generator inner volume has a cross section which increases in one axial direction. A flow of oxidizer, most commonly air, is tangentially introduced into said inner volume through the swirl generator, wherein the oxidizer is introduced into the inner volume essentially along the entire axial extent of the swirl generator inner volume. A vortex axially propagating into the direction in which the cross section of the swirl generator inner volume increases is thus generated. Fuel is admixed to the vortex flow of oxidizer inside the swirl generator inner volume. Fuel and oxidizer form a homogeneous mixture inside said vortex flow. The swirl generator inner volume terminates, at one axial end, with a cross sectional jump at which the cross section abruptly widens, or, in other words, the circumferential walls inside which the vortex is ducted inside the swirl generator vanish at an axial end of the swirl generator. Thus, the axially propagating vortex bursts at said cross-sectional jump, also referred to as a vortex breakdown, and a recirculation zone is established downstream the swirl generator in which a flame of the intensely mixed fuel and oxidizer can persist.

In further developments of said premix burners, it was proposed to place a mixing section between the swirl generator and the cross sectional jump, such as is for instance disclosed in EP 780 629. It is stated that this yields in an even more homogeneous mixing of oxidizer and fuel before the mixture is ignited, even in a gas turbine combustor environment with high pressures and a high temperature of the oxidizer before combustion, which in turn yields in even lower pollutant emissions. Further, the type of burner disclosed in EP 780 629 proves advantageous in combusting highly reactive gaseous fuels, such as for instance fuels which contain significant fractions of hydrogen.

Said type of burner may be easily provided in combining a swirl generator with a fuel supply system, such as for instance disclosed in the above-referenced EP 321 809 or WO 93/17297 and providing a combustor wall element with a front side intended to be placed facing a combustor, the wall element further comprising a trough opening, and further a duct provided in fluid communication with said through opening and interposed between a downstream end of the swirl generator, and the cross sectional jump. Said downstream end of the swirl generator is to be understood as the axial end at which the interior of the swirl generator exhibits the larger cross section. Such, the duct is on one end in fluid communication with the swirl generator and is on the other hand in fluid communication with the through opening, and, when installed in a combustor, with the interior of the combustor. The cross sectional jump which causes the vortex breakdown is then provided at the transition between the duct, or the through opening, respectively, and the front side of the wall.

WO 2014/078694 A1 discloses a combustor wall element comprising a wall with a front surface, a back surface and a through opening penetrating the wall from the front surface to the back surface. A duct extends from the front surface to a back end of the combustor wall element and is in fluid communication with the through opening. At least one cooling channel provided inside the wall extends between a first open end and a second open end. A section of the cooling channel extends essentially parallel to the front surface. Other examples of known combustor wall elements are disclosed in EP 2 148 141 A2 and in US 2016/040880 A1.

It is readily appreciated that a combustor wall element in the overwhelming majority of cases requires cooling. This requires a cooling system to be implemented.

### OUTLINE OF THE SUBJECT MATTER OF THE PRESENT INVENTION

It is an object of the present invention to provide a combustor wall element of the kind initially mentioned. It is a more specific object to provide a combustor wall element which, in combination with a swirl generator, provides a burner of the type for instance disclosed in EP 780 629, wherein a mixing section is interposed between the premix swirl generator and the cross sectional jump provided by a transition to the combustor. In a more specific aspect, the combustor wall segment shall be provided such as to make more efficient use of the coolant, and in turn reduce the coolant consumption. Efficient and uniform cooling shall be achieved, which is intended to improve lifetime.

Moreover, a method for efficiently manufacturing a combustor wall element of the mentioned type shall be disclosed, such as to address the manufacturing expense and complexity.

This is achieved by the subject matter described in claim 1, and further of the independent method claim 14.

Further effects and advantages of the disclosed subject matter, whether explicitly mentioned or not, will become apparent in view of the disclosure provided below.

Accordingly, disclosed is a combustor wall element, the combustor wall element comprising a wall. The wall in particular defines a front side or front end of the combustor wall element. The wall comprises a front surface and a back surface. The front surface is provided on a front side of the wall and the back surface is provided on a back side of the wall. The front surface is also a front surface of the combustor wall element. A through opening penetrates the wall from the front surface to the back surface. A duct is provided extending from the back surface and to a back end of the combustor wall element, and said duct is in fluid communication with the through opening. At least one cooling channel is provided inside the wall, wherein said cooling channel extends between a first open end of the cooling channel and a second open end of the cooling channel, and at least a section of the cooling channel extends at least essentially parallel to the front surface.

Said section of a cooling channel which extends or runs parallel to the front surface may be referred to as a near wall cooling section.

It is noted that within the framework of the present invention the use of the indefinite article "a" or "an" does in no way stipulate a singularity nor does it exclude the presence of a multitude of the named member or feature. It is thus to be read in the sense of "at least one" or "one or a multitude of".

In particular embodiments, the cooling channel opens out onto the front surface through the second open end. The cooling channel may open out onto the back surface of the wall through the first open end. It is understood that in this respect the first open end provides a coolant inlet opening and the second open end provides a coolant discharge opening. The cross sectional area of the cooling channel, at least in the section which runs or extends parallel to the front surface, may in certain embodiments be in a range from 0.5 mm² to 3 mm², wherein the boundary values are included. The cross sectional area may be constant or may vary along the extent of the cooling channel. The at least one cooling channel may exhibit a circular cross section. At the first end or inlet opening of the cooling channels, the edges of the inlet opening may be rounded with a fillet larger than or equal to 0.2 mm and smaller than or equal to 2 mm, such as to reduce pressure losses upon entry of coolant into the cooling channels and not to aerodynamically restrict the mass flow through a cooling channel at the inlet opening. Further, notch effects are reduced and cyclic lifetime is enhanced.

A multitude of cooling channels may be provided, wherein two neighboring cooling channels may be arranged with the wall-parallel sections at least essentially parallel to each other. The inlet and outlet openings of such neighboring cooling channels may be arranged such that the near wall cooling sections of the neighboring cooling channels, when in use, are provided in a coolant counterflow relationship. To this extent for instance the position of the inlet and outlet openings of the two neighboring cooling channels may swapped, such that, in a view onto the front surface, the inlet opening of a first of said channels is arranged proximate the outlet opening of the second of said channels, and vice versa. Due to said counterflow in neighboring near wall cooling sections, the cooling of the wall is rendered more homogeneous, and a more even temperature distribution in the wall is achieved. Thus, thermally induced stresses are reduced and lifetime is enhanced.

The section of a cooling channel which extends at least essentially parallel to the front surface, or, in other words, the near wall cooling section or the near wall cooling sections, may be located at least 0.5 mm from the front surface.

Counterflow cooling as well as providing the near wall cooling channels at a certain distance from the thermally loaded surface reduces thermally induced stresses, and accordingly has a beneficial effect on cyclic lifetime. Features for the relief of thermally induced stresses, such as for instance so-called "mechanical integrity slots", may thus be omitted, which results in both reduced leakage flows and associated reduced coolant consumption, and reduced manufacturing expense.

In certain exemplary embodiments a coolant supply plenum may be provided, wherein the cooling channel is in fluid communication with the coolant supply plenum through the first open end or coolant inlet opening. In particular, a multitude of cooling channels may be in fluid communication with a coolant supply plenum through their respective inlet openings. More in particular, all cooling channels may be in fluid communication with one and the same coolant supply plenum through their respective inlet openings.

In other aspects of the presently disclosed combustor wall element, the wall may comprise a protrusion extending on the front side, wherein said protrusion is provided circumferentially encircling the through opening and forming a conduit which is an extension of the duct being provided on the back side of the wall element. More in particular, an edge is provided at a free front end of the conduit. Said edge is provided as a flow separation edge in order to support and more precisely define the location of a flow separation of a fluid flow which flows from the back end of the wall element through the duct to the front side of the wall. More in particular, the position of a vortex breakdown upon being discharged on the front end is more precisely defined.

According to the invention, a combustor wall element as herein disclosed comprises a fuel supply plenum which is provided distant from the front surface, for instance at least 10mm from the front surface, and towards the back of the combustor wall element, wherein at least one fuel discharge conduit extends from the fuel supply plenum to the front side of the wall. The fuel discharge conduit comprises a back end with an inlet opening in fluid communication with the fuel supply plenum, and a front end with a discharge opening which opens out at the front side of the wall. It is understood that generally a fuel supplied through said plenum is significantly colder than the combustion gases to which the front side of the combustor wall element is exposed in operation. In locating the supply plenum away from the thermally loaded wall, thermal stresses are further reduced. The fuel discharge conduit may terminate with a front pipe section which in turn terminates at the discharge opening, wherein the front pipe section is floatingly provided with a free front end. That is, in other words, the front pipe section cantilevers from a remainder of the conduit. The cantilevering length of the front pipe section may be at least 3 mm. It is understood that a fuel, for instance a fuel gas provided through the fuel discharge conduit, generally is significantly colder than the combustion products in the combustor, and thus significantly colder than the wall and in particular the front side of the wall, despite being cooled through the cooling channels. Consequently, a large temperature difference exists between the wall and the fuel supply conduit. In providing the front pipe section floatingly, that is, disconnected from the wall, thermally induced stresses are largely reduced.

Further, the discharge opening of the fuel discharge conduit may be arranged such that a normal to the discharge opening includes a nonzero angle with a normal of the through opening and/or a centerline of the duct, and said angle is in particular directed radially outwardly with respect to the centerline of the duct. The skilled person will readily understand that the normal of the discharge opening is, at least essentially, identical with a direction of a vector along which a fuel is discharged through the fuel discharge conduits. Said angle may in certain embodiments be larger than or equal to 30° and smaller than or equal to 60°. In more specific embodiments, a multitude of fuel discharge conduits with respective discharge openings may be provided, wherein the centers of the outlet openings are arranged on a circle with a diameter reaching from 100 mm to 250 mm, in particular up to and including 200 mm. In another aspect, the outlet opening or discharge opening of a fuel discharge conduit, and more in particular the center of this outlet opening, may be provided at least 50 mm from a centerline of the duct. Further, the outlet opening of a fuel discharge conduit, and more in particular center of this outlet opening, may be provided at maximum 125 mm from the centerline of the duct, and the distance may in particular embodiment be up to and including 100mm.

The fuel supply plenum may in certain embodiments extend annularly around the duct, wherein a multitude of fuel discharge conduits are circumferentially distributed and provided in fluid communication with the fuel supply plenum at different circumferential positions thereof. At least one of the fuel discharge conduits may extend into the fuel supply plenum. In particular, at least two fuel discharge conduits are provided which extend into the fuel supply plenum for different penetration lengths. For instance, at least one fuel discharge conduit may extend into the fuel supply plenum 0 mm, whereas other fuel discharge conduits may extend into the fuel supply plenum up to and including 20 mm or even 25 mm. Moreover, it may be provided that fuel discharge conduits at different circumferential locations exhibit different flow cross sections. Both measures, alone or in combination, may serve to make up for pressure losses inside the fuel supply plenum, while fuel flows circumferentially through the fuel supply plenum, and the varying mass flow over the circumference of the fuel supply plenum. Thus, a uniform, or otherwise controlled, fuel mass flow distribution through a multitude of fuel discharge conduits may be ensured, which in turn yields a beneficial effect on combustion stability.

It may in certain embodiments be provided that at least one shielding fluid discharge means is provided annularly around a front end of the fuel discharge conduit, such as to provide a flow of shielding fluid sheathing a discharged fuel flow discharged through the outlet opening of the fuel discharge conduit. The shielding fluid discharge means may for instance comprise an annular discharge opening circumferentially extending around a front pipe section of a fuel discharge conduit and encircling a fuel discharge opening of the front pipe section. The shielding fluid discharge means may comprise a conduit through which it is in fluid communication with a shielding fluid supply means. The shielding fluid may in particular be identical with a coolant provided to the cooling channels, and it may thus be provided that the cooling channels and the shielding fluid discharge means are in fluid communication with the same supply means or supply plenum. The shielding fluid may in particular embodiments be air, such as compressed air from a compressor of a gas turbine engine, such as the coolant may be cooling air supplied, for instance, form a compressor of a gas turbine engine. The shielding fluid discharge means and at least one cooling channel may be fluidly connected to a common fluid supply plenum, which may thus also equivalently be referred to as a coolant supply plenum or a shielding fluid supply plenum. While it is described above that the cooling channels and the shielding fluid discharge means are provided to be supplied with the same fluid, and in particular air, it is noted that other fluids, such as for instance steam, may be provided as the shielding fluid and/or the coolant, and different fluids may be supplied as the shielding fluid and the coolant.

In still other aspects, the combustor wall element as disclosed above may be provided as a single integrally formed, monolithic and seamless element. That means, in other words, that the combustor wall element is not assembled from different individually shaped components. No weld connections or other connections are thus present. In said embodiments, the skilled person will readily appreciate that this means, equivalently, that the combustor wall element is primarily shaped as one single component. Casting may, however, be complicated to perform due to a need for complex and delicate casting cores, and may thus be associated with elevated scrap rates and high expense, if practically feasible at all. It is thus disclosed that the combustor wall element is manufactured by an additive manufactiring method, such as for instance Selective Laser Melting (SLM) or Electron Beam Melting (EBM). Generally, the applied method may comprise depositing a layer of a powder material, in particular a metal powder. The powder is then, at selected locations, melted and resolidified. Melting may for instance be effected by laser or electron beam radiation. Subsequently, additional layers of material powder may be deposited on a previous layer, and again selected areas of the powder layer may be melted and resolidified. Said step may be performed on top of a resolidified volume of a preceding layer, and thus the newly melted and resolidified material may be material boned to the resolidified material of a layer below. Thus, in repeating said steps, a solid body may be built along a build-up direction vector. In particular embodiments, the combustor wall element is additively built along a build-up direction vector which includes an angle of no more than 45° with a centerline of the duct. In more particular embodiments, the combustor wall element is additively built along a build-up direction vector which includes an angle of no more than 30° with a centerline of the duct. In even more particular embodiments, the combustor wall element is additively built along a build-up direction vector which includes an angle of no more than 15° with a centerline of the duct. Said angle may in further embodiments be at least essentially 0°. The build-up process may start at the back end of the combustor wall element, or of the duct, respectively. The combustor wall element is the additively built from the back to the front.

Struts may be provided extending from the back surface of the wall and extending to at least one of an outer surface of the duct and/or an inner surface of an outer circumferential structure. Said struts may be provided as supporting structures when manufacturing the combustor wall element with an additive production method, as disclosed above. The number of struts may, in certain embodiments, count three to six times the number of fuel discharge conduits.

In a further aspect of the present invention, a burner for a combustion device is disclosed. The burner comprises a combustor wall element as disclosed above, and a swirl generating device, wherein the swirl generating device is attached to and in fluid communication with a back end of the duct. For instance, in certain embodiments of the combustor wall element, a weld interface may be provided on a back end of the duct. The swirl generator may be weld connected to the combustor wall element at said weld interface. The swirl generator may in certain instances be any swirl generator of the type disclosed in the art cited above, for instance, but not limited to, EP 321 809, WO93/17279, or EP 780 629.

Further disclosed is a gas turbine engine which comprises at least one combustor wall element and/or at least one burner of the kind disclosed above.

It is understood that the features and embodiments disclosed above may be combined with each other. It will further be appreciated that further embodiments are conceivable within the scope of the present invention and the claimed subject matter which are obvious and apparent to the skilled person.

### BRIEF DESCRIPTION OF THE DRAWINGS

The subject matter of the present invention is now to be explained in more detail by means of selected exemplary embodiments shown in the accompanying drawings. The figures show
- Fig. 1: a first perspective view of a combustor wall element in accordance with the present invention from a front side of the combustor wall element;
- Fig. 2: a second perspective view of the combustor wall element from a back side of the combustor wall element;
- Fig. 3: a detailed sectional view of a front section of the combustor wall element, depicting in more detail the arrangement of cooling channels inside a front wall;
- Fig. 4: a further detailed sectional view of a front section of the combustor wall element, depicting in more detail the coolant supply system with a coolant supply plenum;
- Fig. 5: a longitudinal section of the combustor wall element depicting in more detail a fuel supply system or pilot fuel supply; and
- Fig. 6: a detailed view of the front or discharge end of a fuel discharge conduit.

It is understood that the drawings are highly schematic, and details not required for instruction purposes may have been omitted for the ease of understanding and depiction. It is further understood that the drawings show only selected, illustrative embodiments, and embodiments not shown may still be well within the scope of the herein disclosed and/or claimed subject matter.

### EXEMPLARY MODES OF CARRYING OUT THE TEACHING OF THE PRESENT INVENTION

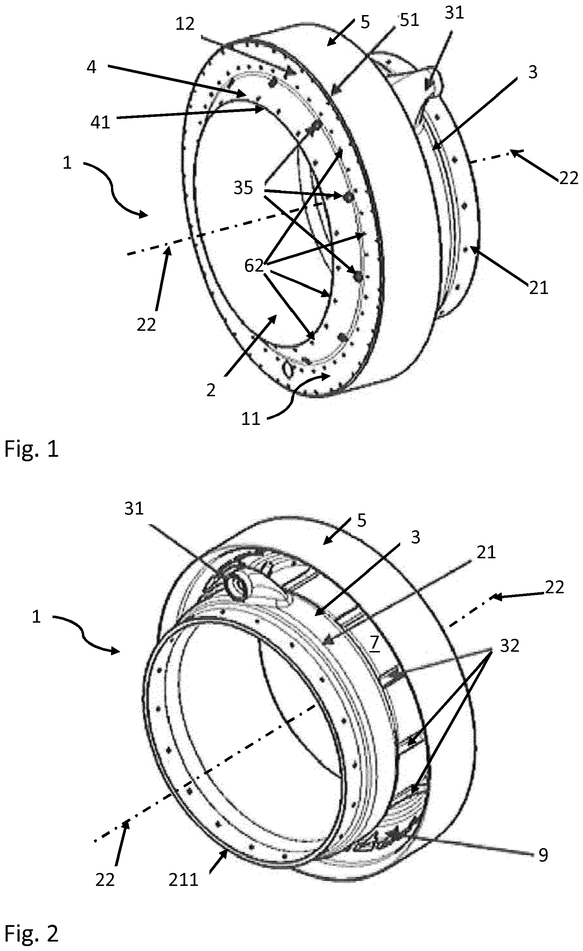

An exemplary embodiment of a combustor wall element 1 in accordance with the present invention becomes generally best appreciated by virtue of figure 1 in combination with figure 2. Combustor wall element 1 comprises wall 11. Wall 11 comprises front surface 12 on a front side of the wall, and a back surface provided on an opposed back side of wall 11 which is not visible in the present depiction, but is outlined in more detail below. A through opening 2 is provided in the wall 11 and extends between the front side of the wall and the back side of the wall. It may generally be stated that combustor wall element 1 comprises a front end and a back end. The front end is provided by the front side of the wall. A duct 21 extends along duct centerline 22 to the back end of combustor wall element 1. A swirl generator connector interface 211 is provided at the back end of the combustor wall element, or the duct, respectively. A swirl generator comprising fuel injection means, as for instance the type of swirl generators initially mentioned, may be fluidly connected to the duct and may be connected to swirl generator interface 211, for instance by welding. The swirl generator in connection with the duct may then provide a burner of the type for instance disclosed in EP 780 629, wherein duct 21 forms the mixing section. Duct 21 is in fluid communication with through opening 2. Wall 11 comprises a protrusion 4 which extends on the front side of wall 11. Protrusion 4 is provided circumferentially encircling through opening 2, and forms a conduit which is an extension of duct 21. An edge 41 is provided at a free front end of the conduit, or of the protrusion, respectively, such that a flow which is directed from the back end of combustor wall element 1 to the front end is subject to a flow separation at edge 41. Further, an outer circumferential structure 5 is provided which forms an outer limiting structure of combustor wall element 1. In the presently shown embodiment, outer circumferential structure 5 is provided as a cylindrical outer ring. Combustor wall element 1 thus has a circular outer cross section. It is appreciated, that other cross-sectional shapes are possible, such as polygonal shapes, and in particular a hexagonal shape. It will further be appreciated by virtue of the specification below, that a fluid plenum 7 is formed between the duct 21 and an inner wall of outer circumferential structure 5. A chamfer 51 provided in a transition region between front surface 12 and an outer surface of outer circumferential structure 5 has proven to improve cyclic lifetime of a combustor wall element. The front side of wall 11, or the front surface 12, respectively, are intended to be placed facing the interior of a combustion appliance, and are thus subject to high temperatures and, accordingly, to high thermal loading upon being operated. Wall 11 is thus equipped with cooling channels. Discharge openings 62 of cooling channels are visible in the depiction of figure 1. Coolant which is provided to cooling channels inside the wall 11 is discharged on front surface 12 through discharge openings 62. Combustor wall element 1 is further equipped with a fuel supply plenum 3 which is provided distant from the front surface and towards the back end of the combustor wall element. Fuel supply plenum 3 comprises an inlet connection piece 31 which is intended to be connected to a fuel supply system, and through which fuel may be provided to fuel supply plenum 3. Fuel discharge conduits 32, best visible in figure 2, are provided in fluid communication with and extend from fuel supply plenum 3 to a front end, and open out on the front surface 12 of wall 11 through fuel discharge openings 35, best visible in figure 1.

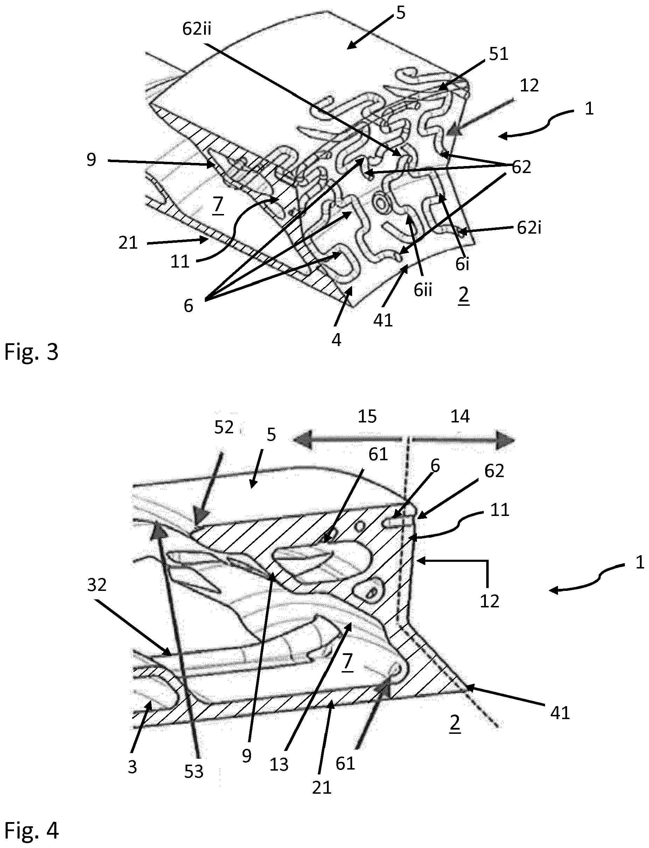

It is appreciated that the combustor wall element as herein disclosed, comprising cooling channels provided inside the wall which, at least partially, run parallel to front surface 12 of wall 11, and further comprising the fuel supply plenum 3 and the multitude of fuel discharge conduits 32, is a fairly complex entity, which may be challenging to manufacture by conventional methods. Assembling combustor wall element 1 from individually manufactured components requires extensive assembly and extensive welding, and in addition complicated and thus expensive machining steps. It is thus proposed to manufacture combustor wall element 1 by means of an additive manufacturing method, such as, for instance, Selective Laser Melting or Electron Beam Melting. Additively building up the combustor wall element may in particular start at the back end, or the swirl generator connection interface 211, and building up the combustor wall element along a build-up direction vector which points from the back end of the combustor wall element to the front end of the combustor wall element. More in particular, the build-up direction vector includes an angle with the center line 22 of the duct which is smaller than or equal to 45 °, and may be at least essentially 0°. As is appreciated, during this build-up method the front wall 11 would be provided as an overhanging structure, which may cause certain issues when building up the combustor wall element. Thus, struts 9 are provided which connect wall 11 with outer circumferential structure 5, and support wall 11 while being manufactured. Horizontal surfaces which point against the build-up direction are thus avoided. It should be noted, that struts 9 may also be provided such as to connect wall 11 with duct 21. While, according to the specification above, struts 9 are primarily present for manufacturing reasons, struts 9 are not removed after the build-up step, but have been found useful to serve further purposes as is outlined in connection with figures 3 and 4 below. In building the combustor wall element by an additive method, the combustor wall element may be provided as a single integrally formed, monolithic and seamless member.

Details of the cooling arrangement of wall 11 are best appreciated by virtue of figures 3 and 4. A multitude of cooling channels 6, two of which are specifically designated in figure 3 as 6i and 6ii, extend inside wall 11 between a first open end or inlet opening 61 and a second open end or discharge opening 62. At least a section of the cooling channels extends at least essentially parallel to the front surface 12, and in particular at a distance of at least 0.5 mm from front surface 12. Cooling channels 6, or at least a part of the cooling channels, may in particular the provided with a circular cross section, wherein the cross section may range from larger than or equal to 0.5 mm² to smaller than or equal to 3 mm². In figures 3 and 4, coolant supply plenum 7 can be seen which is formed between an outer wall of duct 21 and an inner wall of outer circumferential structure 5, and further back surface 13 of wall 11. Cooling channels 6 are in fluid communication with coolant supply plenum 7 through inlet openings 61 in back surface 13 of wall 11. Further, as indicated in connection with figure 1, cooling channels 6 open out onto the front surface 12 of wall 11 through discharge openings 62. A coolant flow through wall 11 may thus be achieved in providing a coolant to coolant supply plenum 7, which then flows through the cooling channels 6 from the back side 15 of wall 11 to the front side 14 of wall 11, and is discharged on the front side of the wall, or at the front surface 12, respectively. It is appreciated that, in order to provide said coolant flow, the coolant inside plenum 7 must be provided at a higher pressure than a fluid on the front side 14 of wall 11. Struts 9 in this respect serve to enhance structural stiffness of the boundary of coolant supply plenum 7 and thus avoid buckling of the, in operation, thermally loaded wall 11 and outer circumferential structure 5 without needing to excessively add material. It is further appreciated in connection with figure 3 that discharge opening 62i of cooling channel 6i is provided at a radially inner position when compared to the discharge opening 62ii of cooling channel 6ii. It will further be appreciated, that inlet opening of cooling channel 6i is provided at a radially outer position when compared to the inlet opening of cooling channel 6ii. Thus, coolant flows through the cooling channels 6i and 6ii are provided in a counterflow relationship, that is, the coolant inside cooling channel 6i flows from a radially outer position to a radially inner position, while coolant inside cooling channel 6ii flows from a radially inner position to a radially outer position. The skilled person will appreciate that due to the fact that the coolant flow in neighboring coolant channels is provided in opposite directions, the overall temperature distribution inside the wall 11 over front surface 12 is rendered largely homogeneous. While not immediately visible in the present depiction, due to scaling, the edges encircling inlet openings 61 of the cooling channels are rounded with a fillet in a range from 0.2 mm to 2 mm. Further, at a back end of outer circumferential structure 5 a chamfer 52 is provided on a back face 53. Said chamfer facilitates inserting the combustor wall element into a combustor wall or between other combustor wall elements.

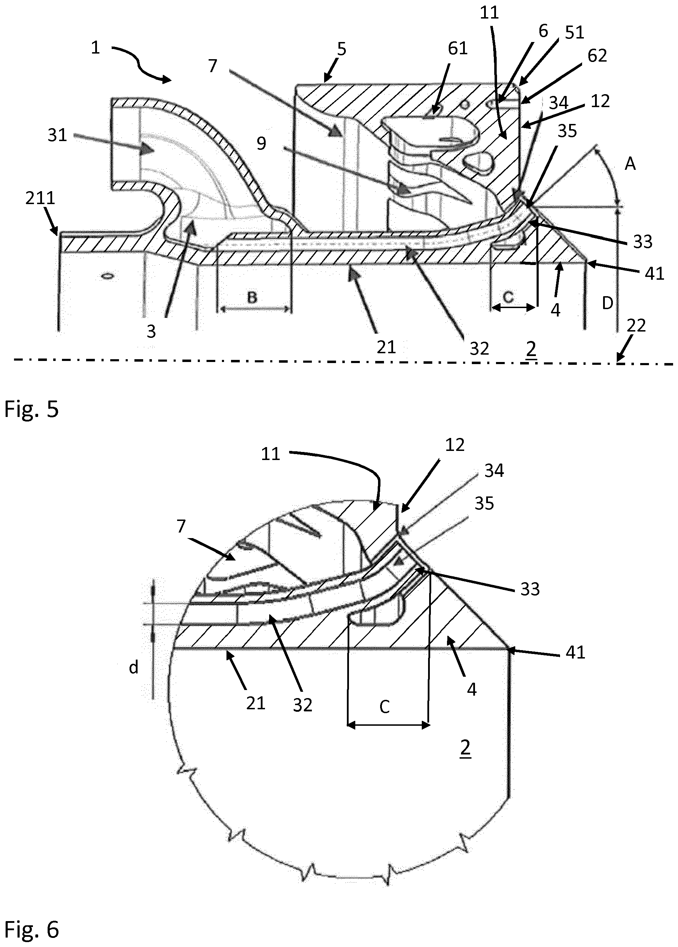

Figure 5 depicts an arrangement for providing, for instance, a piloting fuel and discharging said portion of the total fuel on the front side of the combustor wall element 1. It is understood, that usually a lean, that is, understoichiometric fuel-oxidizer mixture is provided through duct 21 and through opening 2 to the front side of combustor wall element 1. Said premixed fuel-oxidizer mixture is intended to be combusted outside the duct and adjacent front surface 12. However, the lean premixed fuel-oxidizer mixture may, under certain load conditions, tend to yield an instable combustion, due to being operated close to a lean premixed flame-off limit for the benefit of low pollutant formation. In discharging a piloting fuel mass flow on the front side, or at the front surface 12, respectively, said piloting fuel is combusted in a diffusion flame and yields a considerably higher combustion stability. Said diffusion flame may be used to support combustion of the fuel-oxidizer mixture which is discharged from duct 21 through through opening 2, in particular when operating at stoichiometry ratios close to the premix flame off limit. As was outlined above, a fuel plenum 3 is provided at a distance from wall 11 and circumferentially around duct 21. Generally, it may be said that the fuel supplied to fuel supply plenum 3 is several 100 °C colder than a hot gas which is present adjacent front surface 12 during operation of a combustor in which the combustor wall element is implemented. The fuel supplied to fuel supply plenum 3 may also be colder than the coolant supplied to coolant supply plenum 7, and also colder than the fuel-oxidizer mixture flowing inside duct 21. Consequently, stresses due to differential thermal expansion may be expected where structures in which the fuel is guided are in contact with other structures, and in particular with wall 11, and more in particular the front side of wall 11. A fuel discharge conduit 32 is provided in fluid communication with fuel supply plenum 3, and opens out on the front side of wall 11. As is best appreciated by virtue of figure 5 in connection with figure 6, fuel discharge conduit 32 terminates with a front pipe section 33. Front pipe section 33 is floatingly provided with a free front end in which fuel discharge opening 35 is provided, and is freely floating along a length C. Length C, in particular embodiments, measures at least 3 mm. In that the front end of front pipe section 33 is provided freely floating and decoupled from the wall, and the fuel discharge conduit is only coupled and connected to the wall at a distance from the thermally loaded front surface, stresses due to differential thermal expansion are largely reduced when compared to a case wherein the front end of the front pipe section would be firmly connected to wall 11 at the front surface 12. In that the front pipe section is integrated with the combustor wall segment, and is integrally formed with the combustor wall segment, a robust design is achieved which is insensitive to oscillations, and thus chattering between front pipe section 33 and wall 11, in particular the front side thereof, may be avoided. Further, a shielding fluid discharge means 34, in the particular embodiment an annular gap, is provided around front pipe section 33. Shielding fluid discharge means 34 is open on the front surface 12 of wall 11, and is further in fluid communication with coolant supply plenum 7. Such, for instance compressed air which is provided to coolant supply plenum 7 may be used as coolant for cooling wall 11 in being directed though cooling channels 6, and may as well be used as shielding fluid for a pilot fuel discharged through fuel discharge conduit 32. The front pipe section extends radially outwardly, such that a normal to the discharge opening includes a nonzero and outwardly directed angle A with a normal of through opening 2, or of the centerline 22 of the duct, and is directed away from the centerline 22. The fuel is thus discharged in a radially outwardly oriented direction. Fuel discharge angle A may in particular be in a range from larger than or equal to 30° and smaller than or equal to 60°. Fuel discharge opening 35 is for instance provided at a distance from a centerline of the through opening, or the duct, respectively, which is in a range from 50 mm to 125 mm. In a more particular embodiment, at least four fuel discharge conduits are provided and distributed around duct 21, or through opening 2, respectively. More in particular, the fuel discharge conduits and/or the respective fuel discharge openings may be equally distributed around duct 21, or through opening 2, respectively. The respective multitude of fuel discharge openings 35 may be positioned on a diameter D ranging from 100 mm to 250 mm, and more in particular from 125 mm to 198 mm. In the embodiment specifically shown, the fuel discharge openings 35 are provided on the front surface of protrusion 4, and more in particular adjacent a transition from protrusion 4 to a plainly extending section of front surface 12. Moreover, the cross-sectional dimension, or diameter, respectively, d of the fuel discharge conduits may vary from one fuel discharge conduit to another. This further serves to provide a more homogeneous fuel mass flow distribution of the fuel mass flow through inlet opening 31 when discharged on the front side of the combustor wall element.

The skilled person will further appreciate that, as fuel enters fuel supply plenum 3 through inlet 31, and flows through annular fuel supply plenum 3 and fuel conduits 32, an uneven distribution of fuel mass flows to various of the fuel discharge conduits may result. In order to homogenize the fuel distribution in the circumferentially distributed fuel discharge conduits 32, fuel discharge conduits 32 are provided extending into fuel supply plenum 3 with a penetration length B, wherein B is in a range from 0 mm to 25 mm, and in particular up to and including 20 mm. More in particular, fuel discharge conduits 32 may extend into fuel supply plenum 3 at different penetration lengths, such as to compensate for pressure losses and other parameters influencing the fuel distribution to the various fuel discharge conduits.

The piloting fuel mass flow discharged through fuel discharge openings 35 may be in a range of up to 20% at full load conditions, and up to 80% at ignition conditions, of the total fuel mass flow provided on the one hand in a fuel-oxidizer mixture flowing inside duct 2, and being discharged on the front side of combustor wall element 1 through through opening 2, plus the piloting fuel mass flow provided through inlet opening 31 of fuel supply plenum 3 and being discharged through fuel discharge openings 35.

### LIST OF REFERENCE NUMERALS

- 1: combustor wall element
- 2: through opening
- 3: fuel supply plenum
- 4: protrusion
- 5: outer circumferential structure, outer ring
- 6: cooling channels
- 6i: cooling channel
- 6ii: cooling channel
- 7: coolant supply plenum
- 9: strut
- 11: wall
- 12: front surface of wall
- 13: back surface of wall
- 14: front side of wall
- 15: back side of wall
- 21: duct
- 22: centerline of duct
- 31: inlet to fuel supply plenum, fuel inlet
- 32: fuel discharge conduit
- 33: front pipe section of fuel discharge conduit
- 34: shielding air discharge means
- 35: discharge opening or outlet opening of fuel discharge conduit, fuel discharge opening
- 41: edge, flow separation edge
- 51: outer ring front chamfer
- 52: outer circumferential structure or outer ring back chamfer
- 53: outer circumferential structure or outer ring plenum face
- 61: inlet opening of cooling channel
- 62: discharge opening of cooling channel
- 62i: discharge opening of cooling channel 6i
- 62i: discharge opening of cooling channel 6ii
- 211: swirl generator connection interface

- d: cross sectional dimension of fuel discharge conduit, diamater
- A: angle, fuel discharge angle
- B: penetration length of fuel discharge conduit into fuel supply plenum
- C: cantilevering length of front pipe section
- D: diameter on which the fuel discharge openings are provided

## Claims

1. A combustor wall element (1), the combustor wall element comprising a wall (11), the wall comprising a front surface (12) and a back surface (13), the front surface being provided on a front side (14) of the wall and the back surface being provided on a back side (15) of the wall, a through opening (2) penetrating the wall from the front surface to the back surface, a duct (21) being provided extending from the front surface and to a back end of the combustor wall element, and said duct (21) being in fluid communication with the through opening (2), at least one cooling channel (6, 6i, 6ii) being provided inside the wall, wherein said cooling channel extends between a first open end (61) and a second open end (62), and wherein at least a section of the cooling channel (6, 6i, 6ii) extends at least essentially parallel to the front surface (12); and wherein it comprises a fuel supply plenum (3) which is provided distant from the front surface (12) and towards the back of the combustor wall element, **characterised in that** at least one fuel discharge conduit (32) extends from the fuel supply plenum (3) to the front side (14) of the wall,
wherein the fuel discharge conduit comprises a back end with an inlet opening in fluid communication with the fuel supply plenum and a front end with a discharge opening (35) opening out at the front side (14) of the wall.

2. The combustor wall element according to claim 1, **characterized in that** the cooling channel (6, 6i, 6ii) opens out onto the front surface (12) of the wall through the second open end (62).

3. The combustor wall element according to any of the preceding claims, **characterized in that** the cooling channel (6, 6i, 6ii) opens out onto the back surface (13) of the wall through the first open end (61).

4. The combustor wall element according to any of the preceding claims, **characterized in that** the section of the cooling channel (6, 6i, 6ii) which extends at least essentially parallel to the front surface (12) is located at least 0.5 mm from the front surface.

5. The combustor wall element according to any of the preceding claims, **characterized in that** a coolant supply plenum (7) is provided, wherein the cooling channel (6, 6i, 6ii) is in fluid communication with the coolant supply plenum through the first open end (61).

6. The combustor wall element according to any of the preceding claims, **characterized in that** the wall (11) comprises a protrusion (4) extending on the front side (14), wherein said protrusion (4) is provided circumferentially encircling the through opening (2) and forming a conduit which is an extension of the duct (21) being provided on the back side of the combustor wall element, and wherein in particular an edge (41) is provided at a free front end of the conduit.

7. The combustor wall element according to any of the preceding claims, **characterized in that** the fuel discharge conduit (32) terminates with a front pipe section (33) which in turn terminates at the discharge opening (35), wherein the front pipe section is floatingly provided along a length (C) with a free front end and is decoupled from the wall, whereby the fuel discharge conduit (32) is only coupled and connected to the wall at a distance from the thermally loaded front surface (12).

8. The combustor wall element according to claim 7, **characterized in that** the discharge opening (35) is arranged such that a normal to the discharge opening includes a nonzero angle (A) with a normal of the through opening and/or a centerline (22) of the duct.

9. The combustor wall element according to claim 7 or 8, **characterized in that** the fuel supply plenum (3) extends annularly around the duct (21), a multitude of fuel discharge conduits (32) being circumferentially distributed and provided in fluid communication with the fuel supply plenum at different circumferential positions thereof, and wherein at least one of the fuel discharge conduits extends into the fuel supply plenum, and wherein in particular at least two fuel discharge conduits are provided which extend into the fuel supply plenum at different penetration lengths (B).

10. The combustor wall element according to any of claims 7 to 9, **characterized in that** at least one shielding fluid discharge means (34) is provided annularly around a front end of the fuel discharge conduit (32) such as to provide a flow of shielding fluid sheathing a discharged fuel flow discharged through the outlet opening (35) of the fuel discharge conduit.

11. The combustor wall element according to claim 10, **characterized in that** it is provided as a single integrally formed, monolithic and seamless member.

12. A burner for a combustion device, **characterized in** comprising a combustor wall element (1) according to any of the preceding claims and a swirl generating device, wherein the swirl generating device is attached to and in fluid communication with a back end (211) of the duct.

13. A gas turbine engine, **characterized in** comprising at least one combustor wall element according to the preceding claims.

14. A method for manufacturing a combustor wall element according to any of the preceding claims, the method comprising applying an additive manufacturing method, wherein the wall element is additively built up along a build-up direction vector, **characterized in that** the build-up direction vector points from a back end of the wall element to the front end of the wall element, and the build-up direction vector includes an angle with a centerline of the duct which is smaller than or equal to 45°.

## Patentansprüche

1. Brennkammerwandelement (1), umfassend eine Wand (11) mit einer vorderen Fläche (12) und einer hinteren Fläche (13), wobei die vordere Fläche an einer Stirnseite (14) der Wand und die hintere Fläche an einer Rückseite (15) der Wand angeordnet ist; eine Durchgangsöffnung (2), welche sich von der vorderen Fläche zu der hinteren Fläche durch die Wand erstreckt, einen Kanal (21), der sich von der vorderen Fläche zu einem hinteren Ende des Brennkammerwandelements erstreckt, wobei der Kanal (21) in Fluidverbindung mit der Durchgangsöffnung (2) steht, mindestens einen in der Wand angeordneten Kühlkanal (6, 6i, 6ii), der sich zwischen einem ersten offenen Ende (61) und einem zweiten offenen Ende (62) erstreckt, wobei sich mindestens ein Abschnitt des Kühlkanals (6, 6i, 6ii) mindestens im Wesentlichen parallel zu der vorderen Fläche (12) erstreckt; zudem umfassend eine Brennstoffzuführungskammer (3), die von der vorderen Fläche (12) beabstandet und in Richtung der Hinterseite des Brennkammerwandelements angeordnet ist, **dadurch gekennzeichnet, dass** sich mindestens eine Brennstoffauslassleitung (32) von der Brennstoffzuführungskammer (3) zu der Stirnseite (14) der Wand erstreckt, wobei die Brennstoffauslassleitung ein hinteres Ende mit einer Einlassöffnung umfasst, die mit der Brennstoffzuführungskammer in Fluidverbindung steht, und ein vorderes Ende mit einer Auslassöffnung (35), die zu der Stirnseite (14) der Wand geöffnet ist.

2. Brennkammerwandelement nach Anspruch 1, **dadurch gekennzeichnet, dass** der Kühlkanal (6, 6i, 6ii) durch das zweite offene Ende (62) zu der vorderen Fläche (12) der Wand geöffnet ist.

3. Brennkammerwandelement nach einem der vorstehenden Ansprüche, **dadurch gekennzeichnet, dass** der Kühlkanal (6, 6i, 6ii) durch das erste offene Ende (61) zu der hinteren Fläche (13) der Wand geöffnet ist.

4. Brennkammerwandelement nach einem der vorstehenden Ansprüche **dadurch gekennzeichnet, dass** der Abschnitt des Kühlkanals (6, 6i, 6ii), der sich mindestens im Wesentlichen parallel zu der vorderen Fläche (12) erstreckt, mindestens im Abstand von 0,5 mm von der vorderen Fläche (12) angeordnet ist.

5. Brennkammerwandelement nach einem der vorstehenden Ansprüche, **dadurch gekennzeichnet, dass** eine Kühlmittelkammer (7) vorgesehen ist, wobei der Kühlkanal (6, 6i, 6ii) durch das erste offene Ende (61) mit der Kühlmittelkammer in Fluidverbindung steht.

6. Brennkammerwandelement nach einem der vorstehenden Ansprüche, **dadurch gekennzeichnet, dass** die Wand (11) einen sich an der Stirnseite (14) erstreckenden Vorsprung (4) aufweist, der die Durchgangsöffnung (2) umlaufend umschließt und einen Kanal bildet, der eine Verlängerung des an der Rückseite des Brennkammerwandelements vorgesehenen Kanals (21) ist, wobei insbesondere eine Kante (41) an einem freien Vorderende des Kanals angeordnet ist.

7. Brennkammerwandelement nach einem der vorstehenden Ansprüche, **dadurch gekennzeichnet, dass** die Brennstoffauslassleitung (32) mit einem vorderen Rohrabschnitt (33) abschließt, der wiederum an der Auslassöffnung (35) endet, wobei der vordere Rohrabschnitt entlang einer Länge (C) schwimmend mit einem freien Vorderende versehen und von der Wand abgekoppelt ist, wobei die Brennstoffauslassleitung (32) nur in einem Abstand von der wärmebeanspruchten vorderen Fläche (12) mit der Wand verbunden ist.

8. Brennkammerwandelement nach Anspruch 7, **dadurch gekennzeichnet, dass** die Auslassöffnung (35) so angeordnet ist, dass eine Senkrechte zu der Auslassöffnung einen von null verschiedenen Winkel (A) mit einer Senkrechte der Durchgangsöffnung und/oder einer Mittellinie (22) des Kanals einschließt.

9. Brennkammerwandelement nach Anspruch 7 oder 8, **dadurch gekennzeichnet, dass** sich die Brennstoffzuführungskammer (3) ringförmig um den Kanal (21) erstreckt, wobei eine Vielzahl von Brennstoffauslassleitungen (32) umlaufend verteilt ist und an unterschiedlichen umlaufenden Positionen mit der Brennstoffzuführungskammer in Fluidverbindung steht und sich mindestens eine der Brennstoffauslassleitungen in die Brennstoffzuführungskammer erstreckt, wobei insbesondere mindestens zwei Brennstoffauslassleitungen vorgesehen sind, die sich mit unterschiedlichen Eindringlängen (B) in die Brennstoffzuführungskammer erstrecken.

10. Brennkammerwandelement nach Anspruch 7 oder 8, **dadurch gekennzeichnet, dass** mindestens eine Auslassvorrichtung (34) für eine Schutzflüssigkeit ringförmig um ein Vorderende der Brennstoffauslassleitung (32) vorgesehen ist, so dass ein Schutzflüssigkeitsstrom einen Brennstoffstrom umhüllt, der aus der Auslassöffnung (35) der Brennstoffauslassleitung austritt.

11. Brennkammerwandelement nach Anspruch 10, **dadurch gekennzeichnet, dass** das Element als ein einzelnes, einteilig geformtes, nahtloses Element ausgebildet ist.

12. Brenner für eine Brennkammervorrichtung, umfassend ein Brennkammerwandelement (1) nach einem der vorstehenden Ansprüche und eine drallerzeugende Vorrichtung, wobei die drallerzeugende Vorrichtung an einem hinteren Ende (211) des Kanals befestigt ist, mit dem es in Fluidverbindung steht.

13. Gasturbinentriebwerk, umfassend mindestens ein Brennkammerwandelement nach den vorstehenden Ansprüchen.

14. Verfahren zur Herstellung eines Brennkammerwandelements nach einem der vorstehenden Ansprüche, wobei das Verfahren die Anwendung eines additiven Fertigungsverfahrens umfasst und das Wandelement entlang eines Aufbau-Richtungsvektors additiv aufgebaut wird, **dadurch gekennzeichnet, dass** der Aufbau-Richtungsvektor von einem hinteren Ende des Wandelements zum vorderen Ende des Wandelements zeigt und mit einer Mittellinie des Kanals einen Winkel einschließt, der kleiner oder gleich 45° ist.

## Revendications

1. Élément de paroi de chambre de combustion (1), l'élément de paroi de chambre de combustion comprenant une paroi (11), la paroi comprenant une surface avant (12) et une surface arrière (13), la surface avant étant prévue sur un côté avant (14) de la paroi et la surface arrière étant prévue sur un côté arrière (15) de la paroi, une ouverture débouchante (2) pénétrant dans la paroi de la surface avant à la surface arrière, un conduit (21) étant prévu en s'étendant à partir de la surface avant et jusqu'à une extrémité arrière de l'élément de paroi de chambre de combustion, et ledit conduit (21) étant en communication de fluide avec l'ouverture débouchante (2), au moins un canal de refroidissement (6, 6i, 6ii) étant prévu à l'intérieur de la paroi, dans lequel ledit canal de refroidissement s'étend entre une première extrémité ouverte (61) et une seconde extrémité ouverte (62), et dans lequel au moins une section du canal de refroidissement (6, 6i, 6ii) s'étend au moins essentiellement parallèlement à la surface avant (12) ; et comprenant un plénum d'alimentation en combustible (3) qui est prévu à distance de la surface avant (12) et vers l'arrière de l'élément de paroi de chambre de combustion, **caractérisé en ce qu'**au moins un conduit de décharge de combustible (32) s'étend à partir du plénum d'alimentation en combustible (3) jusqu'au côté avant (14) de la paroi,
dans lequel le conduit de décharge de combustible comprend une extrémité arrière avec une ouverture d'entrée en communication de fluide avec le plénum d'alimentation en combustible et une extrémité avant avec une ouverture de décharge (35) s'ouvrant sur le côté avant (14) de la paroi.

2. Élément de paroi de chambre de combustion selon la revendication 1, **caractérisé en ce que** le canal de refroidissement (6, 6i, 6ii) s'ouvre sur la surface avant (12) de la paroi à travers la seconde extrémité ouverte (62).

3. Élément de paroi de chambre de combustion selon l'une quelconque des revendications précédentes, **caractérisé en ce que** le canal de refroidissement (6, 6i, 6ii) s'ouvre sur la surface arrière (13) de la paroi à travers la première extrémité ouverte (61).

4. Élément de paroi de chambre de combustion selon l'une quelconque des revendications précédentes, **caractérisé en ce que** la section du canal de refroidissement (6, 6i, 6ii) qui s'étend au moins essentiellement parallèlement à la surface avant (12) est positionnée au moins à 0,5 mm de la surface avant.

5. Élément de paroi de chambre de combustion selon l'une quelconque des revendications précédentes, **caractérisé en ce que** l'on prévoit un plénum d'alimentation en réfrigérant (7), dans lequel le canal de refroidissement (6, 6i, 6ii) est en communication de fluide avec le plénum d'alimentation en réfrigérant à travers la première extrémité ouverte (61).

6. Élément de paroi de chambre de combustion selon l'une quelconque des revendications précédentes, **caractérisé en ce que** la paroi (11) comprend une saillie (4) s'étendant sur le côté avant (14), dans lequel ladite saillie (4) est prévue en encerclant, de manière circonférentielle, l'ouverture débouchante (2) et en formant un conduit qui est une extension du conduit (21) qui est prévu sur le côté arrière de l'élément de paroi de chambre de combustion, et dans lequel en particulier, un bord (41) est prévu au niveau de l'extrémité avant libre du conduit.

7. Élément de paroi de chambre de combustion selon l'une quelconque des revendications précédentes, **caractérisé en ce que** le conduit de décharge de combustible (32) se termine par une section de tuyau avant (33) qui se termine à son tour au niveau de l'ouverture de décharge (35), dans lequel la section de tuyau avant est prévue de manière flottante le long d'une longueur (C) avec une extrémité avant libre et est découplée de la paroi, de sorte que le conduit de décharge de combustible (32) est uniquement couplé et raccordé à la paroi à une distance de la surface avant (12) chargée thermiquement.

8. Élément de paroi de chambre de combustion selon la revendication 7, **caractérisé en ce que** l'ouverture de décharge (35) est agencée de sorte qu'une normale par rapport à l'ouverture de décharge comprend un angle non nul (A) avec une normale de l'ouverture débouchante et/ou d'une ligne centrale (22) du conduit.

9. Élément de paroi de chambre de combustion selon la revendication 7 ou 8, **caractérisé en ce que** le plénum d'alimentation en combustible (3) s'étend de manière annulaire autour du conduit (21), une multitude de conduits de décharge de combustible (32) étant répartis de manière circonférentielle et prévus en communication de fluide avec le plénum d'alimentation en combustible à différentes positions de ses positions circonférentielles, et dans lequel au moins l'un des conduits de décharge de combustible s'étend dans le plénum d'alimentation en combustible, et dans lequel en particulier on prévoit au moins deux conduits de décharge de combustible qui s'étendent dans le plénum d'alimentation en combustible à différentes longueurs de pénétration (B).

10. Élément de paroi de chambre de combustion selon l'une quelconque des revendications 7 à 9, **caractérisé en ce qu'**au moins un moyen de décharge de fluide de protection (34) est prévu de manière annulaire autour d'une extrémité avant du conduit de décharge de combustible (32) afin de fournir un écoulement de fluide de protection gainant un écoulement de combustible déchargé, déchargé par l'ouverture de sortie (35) du conduit de décharge de combustible.

11. Élément de paroi de chambre de combustion selon la revendication 10, **caractérisé en ce qu'**il est prévu en tant qu'élément unique monolithique et sans soudure formé de manière solidaire.

12. Brûleur pour un dispositif de combustion, **caractérisé en ce qu'**il comprend un élément de paroi de chambre de combustion (1) selon l'une quelconque des revendications précédentes et un dispositif de génération de tourbillon, dans lequel le dispositif de génération de tourbillon est fixé à et est en communication de fluide avec une extrémité arrière (211) du conduit.

13. Moteur de turbine à gaz **caractérisé en ce qu'**il comprend au moins un élément de paroi de chambre de combustion selon les revendications précédentes.

14. Procédé pour fabriquer un élément de paroi de chambre de combustion selon l'une quelconque des revendications précédentes, le procédé comprenant l'étape consistant à appliquer un procédé de fabrication d'additif, dans lequel l'élément de paroi est constitué de manière additive le long d'un vecteur de direction de constitution, **caractérisé en ce que** le vecteur de direction de constitution pointe d'une extrémité arrière de l'élément de paroi à l'extrémité avant de l'élément de paroi, et **en ce que** le vecteur de direction de constitution comprend un angle avec une ligne centrale du conduit qui est inférieur ou égal à 45°.
